# EUROPÄISCHE PATENTSCHRIFT

(11) **EP 0 507 902 B1**
(45) Veröffentlichungstag und Bekanntmachung des Hinweises auf die Patenterteilung: **03.05.1995**
(21) Anmeldenummer: 91917610.7
(22) Anmeldetag: 05.10.1991
(51) Int. Cl.: G01P 15/08

(54) **BESCHLEUNIGUNGSSENSOR**
ACCELERATION SENSOR
DETECTEUR D'ACCELERATION

(30) Priorität: 25.10.1990 DE 4033885
(43) Veröffentlichungstag der Anmeldung: 14.10.1992
(73) Patentinhaber: ROBERT BOSCH GMBH, 70442 Stuttgart (DE)
(72) Erfinder: KAISER, Harry, D-7145 Markgröningen (DE); WILLIG, Rainer, D-7146 Tamm (DE)
(86) Internationale Anmeldenummer: DE9100788
(87) Internationale Veröffentlichungsnummer: WO9208138

(56) Entgegenhaltungen:
- EP-A- 0 251 069
- WO-A-87/06347

## Beschreibung

### Stand der Technik

Die Erfindung geht aus von einem Beschleunigungssensor nach der Gattung des Hauptanspruchs. Bei einem derartigen, aus WO-A- 87/06347 bekannten Sensor ist als seismische Masse an der Biegefeder ein Permanentmagnet befestigt, der zur Erzeugung eines Meßsignals mit einem Hall-Element in Wirkverbindung steht. Das Hall-Element ist auf einem Hybrid befestigt, das auf der Grundplatte des Beschleunigungssensors angeordnet ist. Die Biegefeder ist senkrecht zum Hybrid ausgebildet und weist eine schräg verlaufende Längskante auf, wodurch ein Verdrehen der Biegefeder verhindert werden soll. Durch diese Anordnung der Biegefeder und durch deren Ausgestaltung baut der Beschleunigungssensor aber relativ hoch. Ferner kann die Feder leicht bei einem Herabfallen des Beschleunigungssensors brechen oder plastisch verformt werden, wodurch die Meßwerte verfälscht werden bzw. der Sensor nicht mehr einsatzfähig ist.

### Vorteile der Erfindung

Der erfindungsgemäße Beschleunigungssensor mit den Merkmalen des Hauptanspruchs hat demgegenüber den Vorteil, daß er eine sehr geringe Bauhöhe, das heißt ein sehr geringes Bauvolumen aufweist. Die Feder mit der seismischen Masse ist geschützt in der Ausnehmung einer Platte angeordnet. Dadurch wird eine Fallsicherheit aus mindestens 1 Meter Höhe auf Beton erreicht. Die Platte selbst und der auf der Platte angeordnete Hybrid dient als Überlastschutz.

Ferner kapselt diese Anordnung die Biegefeder und die Sensormagnete ab, so daß die Meßeinrichtung vor Verschmutzung geschützt ist. Die Resonanzfrequenz der Biegefeder kann in einfacher Weise durch die Wahl des Materials der Biegefeder beeinflußt werden. Durch die Wahl des Werkstoffes Tombak für die Biegefeder wird die Biegefeder in Sensierrichtung und Knickrichtung nicht mehr plastisch verformt. Aufgrund der geometrisch optimal auslegbaren Anschläge für die seismische Masse erhält man eine annähernde Gerade als Meßsignalverlauf. Da die Sensormagnete gleichzeitig die seismische Masse darstellen, kann diese möglichst klein gehalten werden, wobei aber die magnetische Induktion durch die Wahl der Permanentmagnete relativ groß ist. Die Hybridrückseite liegt aufgrund ihrer Verbindung mit der Anschlagplatte und der Grundplatte des Gehäuses auf Fahrzeugmasse. Dadurch ergibt sich eine relativ geringe EMV-Empfindlichkeit (EMV = Elekromagnetische Verträglichkeit). Die Anzahl der verwendeten Einzelteile ist relativ gering. Ferner ist der Sensor in einer geringen Anzahl von Montage- und Fügeschritten herstellbar. Die Montage des Sensors kann nahezu vollautomatisch ausgeführt werden. Nach Anbau des Steckergehäuses kann der Hybrid in einfacher Weise abgeglichen werden, wobei das Gehäuse selbst noch nicht übergeschoben ist. Durch Verwendung der Bondtechnik als Verbindung zwischen dem Hybrid und dem Stecker ist dieser Herstellungsschritt automatisierbar und in sicherer Weise, das heißt ohne großer Ausfallzahlen, herstellbar.

Die Permanentmagnete ziehen sich gegenseitig an, so daß nur eine einfache Klebung verwendet zu werden braucht. Die Klebung ist primär nur notwendig, um bei auftretenden Stößen eine Verschiebung der Permanentmagnete zueinander zu verhindern. Die verwendete Grundplatte mit den Anschlußflanschen ermöglicht eine hohe Einbaugenauigkeit im Fahrzeug. Aufgrund der einfachen symetrischen Gestaltung und des massiven stabilen Meßelements des Beschleunigungssensors ist ein gutes Temperaturverhalten des Sensors erreichbar. Der Innenraum des verwendeten Gehäuses ist so groß, daß jederzeit auch unterschiedliche Hybride verwendet werden können, wobei insbesondere auch Hybride mit einem hohen IC-Rahmen möglich sind. Werden Hybride mit hoher Verlustleistung und somit hoher entstehender Wärme verwendet, so kann diese Wärme über die Grundplatte zur Fahrzeugkarosserie abgeleitet werden. Der Sensor ist in sehr preisgünstiger Weise herstellbar. Das am Steckergehäuse befestigte Meßelement wird nur in das Gehäuse eingeschoben, wobei das Gehäuse und das Steckergehäuse miteinander verrasten.

Durch die in den abhängigen Ansprüchen aufgeführten Maßnahmen sind vorteilhafte Weiterbildungen des im Anspruch 1 angegebenen Beschleunigungssensors möglich.

### Zeichnung

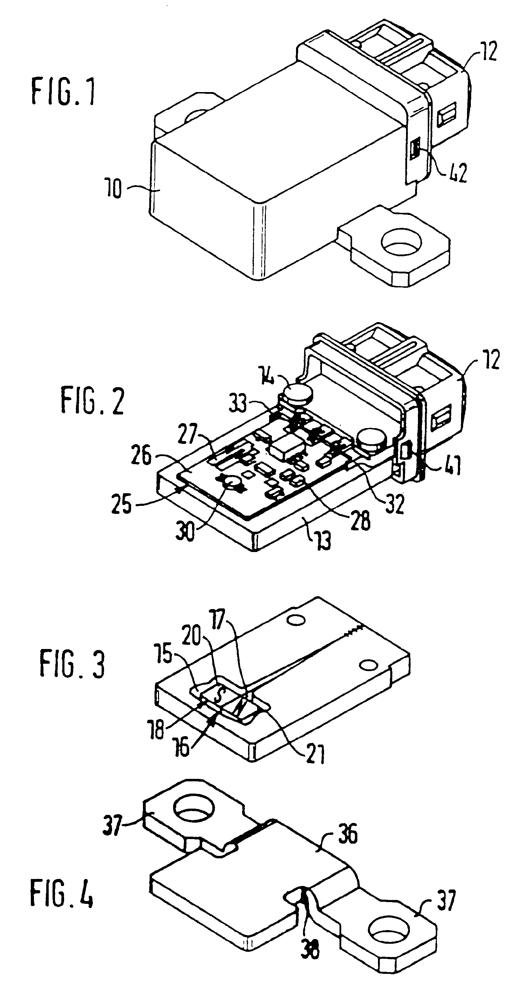

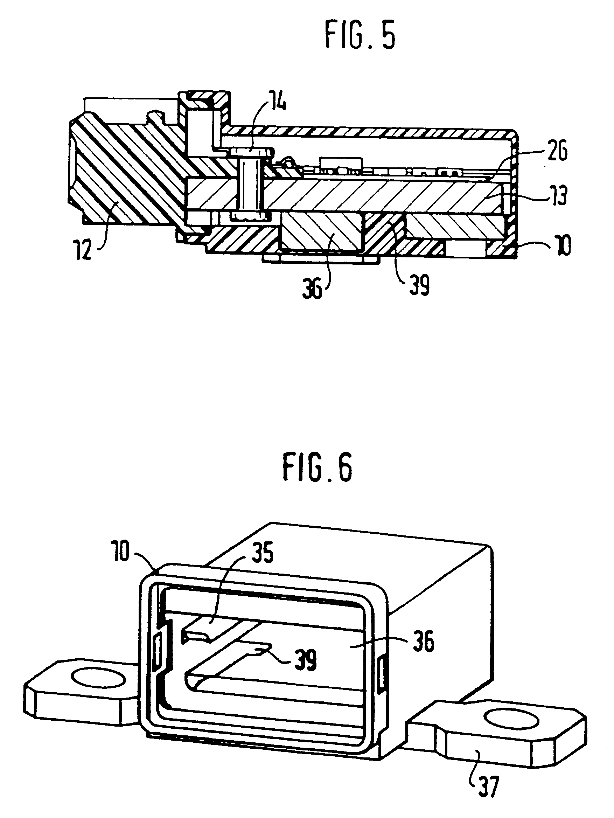

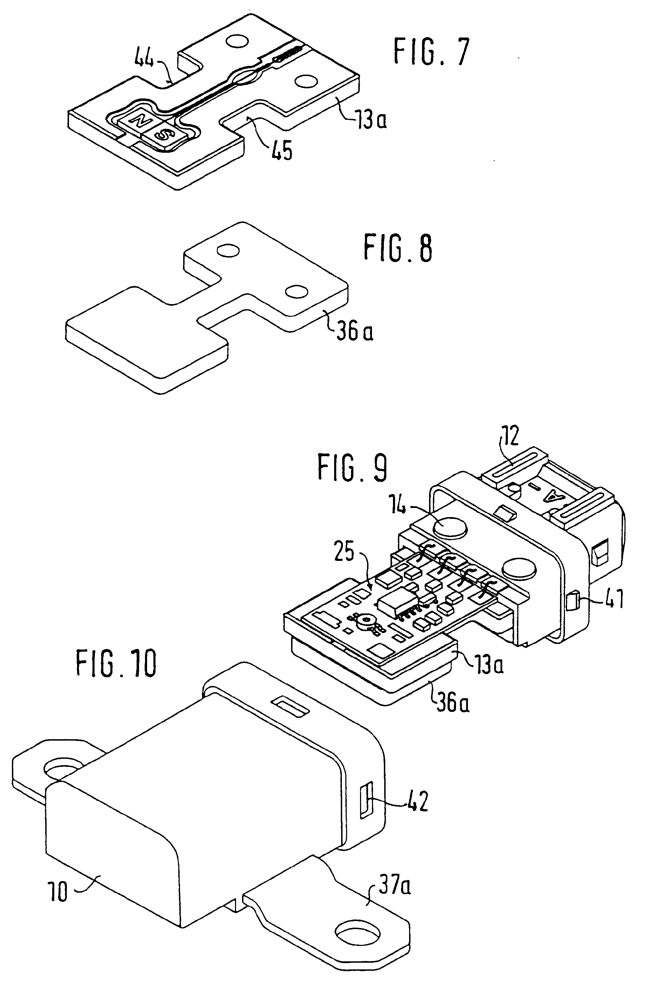

Ein Ausführungsbeispiel der Erfindung ist in der Zeichnung dargestellt und in der nachfolgenden Beschreibung näher erläutert. Es zeigen Figur 1 ein Vormontageteil eingesetzt in das Gehäuse des Sensors, Figur 2 das Vormontageteil, Figur 3 eine Platte mit angeschweißter Biegefeder und seismischer Masse, Figur 4 die Grundplat te, Figur 5 einen Längsschnitt durch den Sensor nach Figur 1, und Figur 6 einen Blick in das Gehäuseinnere, und die Figuren 7 bis 10 Abwandlungen von Einzelheiten.

### Beschreibung des Ausführungsbeispiels

In der Figur 1 ist mit 10 das Gehäuse eines Beschleunigungssensors 11 bezeichnet, das ein in das Gehäuse 10 einschnappbares Steckergehäuse 12 mit in der Figur 1 nicht sichtbaren elektrischen Anschlußsteckern aufweist. Der Aufbau des Sensors 11 ist aus der Figur 2 erkennbar. Eine Anschlagplatte 13 ist mit Hilfe mehrerer Zylindernieten 14 an dem Steckergehäuse 12 befestigt. Wie aus Figur 3 ersichtlich ist, weist die Platte 13 eine im Querschnitt etwa T-förmige Ausnehmung 15 auf, in der ein Meßelement 16, bestehend aus einer etwa rechteckförmigen Biegefeder 17 und einer seismischen Masse 18 angeordnet ist. Die Ausnehmung 15 ist so groß ausgebildet, daß die für den gewünschten Meßbereich notwendige Beweglichkeit der Biegefeder 17 gegeben ist, hingegen die Platte 13 zugleich als Anschlag für das Meßelement 16 und somit als Überlastschutz für die Biegefeder 17 dient. Im Bereich der Biegefeder 17 sollte die Ausnehmung 15 eine Beweglichkeit der Biegefeder 17 innerhalb des gewünschten Meßbereichs ermöglichen, hingegen bei einem Aufprall auf eine der Stirnseiten der Platte 13 sollte ein möglichst rascher Anschlag der Biegefeder 17 bewirkt werden. Für die Schutzfunktion vor mechanischen Beeinträchtigungen sollte die Biegefeder 17 und die seismische Masse 18 nicht über die Ober- bzw. Unterseite der Platte 13 hinausragen. Die Biegefeder 17 besteht aus dem Werkstoff Tombak.

Die Biegefeder 17 ist mit ihrem einen Ende an der Platte 13 mit Hilfe von Laserschweißen befestigt. Die seismische Masse 18 besteht aus zwei Permanentmagneten 20, 21, deren Polarität senkrecht zur Bewegungsrichtung der Biegefeder 17 ausgerichtet ist. Ferner ist die Polarität der beiden Permanentmagnete 20, 21 entgegengesetzt gerichtet, so daß sich die zu beiden Seiten der Biegefeder 17 angeordneten Permanentmagneten 20, 21 gegenseitig anziehen. Die Permanentmagnete 20, 21 sind zusätzlich noch verklebt, wobei ein einfacher, preisgünstiger Kleber ausreicht, um bei Stoßeinwirkungen ein gegenseitiges Verschieben der Permanentmagnete 20, 21 zu verhindern.

Wie aus der Figur 2 ersichtlich ist, befindet sich auf der Platte 13 ein Hybrid 25, auf dessen Träger 26 Dickschichtwiderstände 27 und elektronische Bauteile 28, wie zum Beispiel Transistoren, Widerstände, etc. einer elektrischen Auswerteschaltung angeordnet sind. Die elektronischen Bauteile 28 sind untereinander mit Dickschichtleiterbahnen oder Bonddrähten verbunden. Ferner befindet sich auf dem Träger 26 des Hybrids 25 ein Hall-Element 30, das möglichst zentral über der Berührungslinie der beiden Permanentmagneten 20, 21 angeordnet sein soll. Mit Hilfe von am Steckergehäuse 12 ausgebildeten Anschlagschienen 32 ist der Träger 26 des Hybrids 25 auf der Platte 13 justiert. Die elektronischen Bauteile 28 des Hybrids 25 sind durch Bonddrähte 33 mit den Steckern des Steckergehäuses 12 verbunden.

Die Platte 13 liegt im Inneren des Gehäuses 10 an einer aus der Figur 6 ersichtlichen Führungsschiene 35 an. Das Gehäuse 10 ist auf einer Grundplatte 36 aufgesetzt oder aufgespritzt, die zwei flanschartige Fortsätze 37 aufweist. Die Grundplatte 36 hat im Bereich der flanschartigen Fortsätze 37 auf jeder Seite eine Aussparung 38, in die ein Gehäusefortsatz 39 zur Fixierung ragt.

Wie aus der Figur 5 ersichtlich ist, liegt die Anschlußplatte 13 auf der Grundplatte 36 auf. Die Grundplatte 36 selbst besteht aus Kupfer oder aus einem anderen nicht magnetischen, aber elektrisch leitenden Material. Sie schließt somit die Unterseite der Ausnehmung 15 der Platte 13 ab und steht somit auch in Wirkverbindung mit den Permanentmagneten 20, 21 des Meßelements 16. Dadurch erhält man eine Doppelfunktion der Permanentmagneten 20, 21. Sie wirken sowohl als seismische Masse 18 der Biegefeder 17 als auch bewirken sie zusammen mit der Grundplatte 36 eine Dämpfung der Schwingung der Biegefeder 17. Bei der Bewegung der Permanentmagnete 20, 21 bilden sich auf der Grundplatte 36 Wirbelströme aus, die der Bewegung der Biegefeder 17 entgegenwirken und somit diese dämpfen.

Der Beschleunigungssensor 11 ist beispielsweise senkrecht zur Fahrtrichtung eines Fahrzeugs angeordnet. Die träge Masse in Form der Biegefeder 17 und der Permanentmagnete 20, 21 wird proportional zur senkrecht zur Biegefeder 17 einwirkenden Beschleunigung ausgelenkt.

Die Auslenkung wird ferner durch die Federkonstante der Biegefeder 17, das heißt deren Form und deren Werkstoff, und der trägen Masse bestimmt. Das Meßsignal wird durch die Bewegung der Permanentmagneten 20, 21, das heißt des von diesen erzeugten Magnetfeldes, im Bereich des Hall-Elements 30 bewirkt. Durch Veränderung des Magnetfeldes wird im Hall-Element 30 bekanntlich eine elektrische Spannung induziert, die über die elektronische Auswerteschaltung des Hybrids 25 ausgewertet wird. Bereits geringe Auslenkungen der Biegefeder 17 bewirken eine Veränderung des Magnetfelds im Bereich des Hall-Elements 30. Gleichzeitig wird durch die Bewegung der Permanentmagnete 20, 21 eine Dämpfung der Schwingung der Biegefeder 17 durch die erzeugten Wirbelströme in der Oberfläche der Grundplatte 36 bewirkt. Durch diese bei der Schwingung induzierten Wirbelströme wird die Schwingungsenergie der Biegefeder 17 abgebaut. Durch geeignete Auslegung des Systems Biegefeder-Magnetkreis kann jede gewünschte Dämpfung erzielt werden.

Durch die konstruktive Ausgestaltung des Beschleunigungssensors 11 kann dieser auch in besonders einfacher und preisgünstiger Weise hergestellt werden. Hierzu wird die Biegefeder 17 mit den am einen Ende angeklebten Permanentmagneten 20, 21 in die Ausnehmung 15 der Anschlagplatte 13 eingesetzt und das eine Ende der Biegefeder 17 an der Platte 13 mit Hilfe von Laserschweißen befestigt. Nun wird die Anschlagplatte 13 mit Hilfe der Zylindernieten 14 am Steckergehäuse 12 befestigt. Im nächsten Herstellungsschritt wird der vorgefertigte Hybrid 25 mit den auf dem Träger 26 angeordneten Dickschichtwiderständen 27 und den elektronischen Bauteilen 28 auf die Anschlagplatte 13 aufgeklebt. Die Anschlagschienen 32 des Steckergehäuses 12 dienen dabei zur Zentrierung des Hybrids 25 auf der Anschlagplatte 13. Mit Hilfe einer einfachen zusätzlichen Justiervorrichtung, die kurzzeitig an die Anschlagplatte 13 angesetzt wird, kann der Hybrid 25 in seiner Längsachse verschoben werden, so daß das Hall-Element 30 genau über der Berührungslinie der beiden Permanentmagnete 20, 21 sitzt. Diese Zentrierung ist notwendig, um ein genaues, optimales und reproduzierbares Meßsignal zu erhalten. Die Justiervorrichtung wird anschließend wieder abgenommen. Der Kleber zur Befestigung des Hybrids 25 auf der Anschlagplatte 13 kann nun vor- oder aushärten. Der Hybrid 25 wird nun mit Hilfe von Bonddrähten 33 mit den Steckern des Steckergehäuses 12 elektrisch verbunden. Dadurch erhält man ein vorgefertigtes, und leicht handhabbares Vormontageteil, wie es in der Figur 2 dargestellt ist.

Das Gehäuse 10 besteht aus einer Spritzgußmasse und ist auf die Grundplatte 36 aufgespritzt. Somit entsteht ein zweites Vormontageteil, das aus der fest miteinander verbundenen Grundplatte 36 und dem Gehäuse 10 besteht. Diese beiden Vormontageteile werden nun ineinandergeschoben, wobei das Steckergehäuse 12 mit Rastnasen 41 in Ausnehmungen 42 des Gehäuses 10 einschnappt.

Vor dem Zusammenbau der beiden Montageteile kann der Hybrid 25 elektrisch abgeglichen und kontrolliert werden.

In den in den Figuren 7 bis 10 dargestellten Abwandlungen des Ausführungsbeispiels weist die Anschlußplatte 13a etwa in der Mitte zwischen der Schweißstelle der Biegefeder 17 und den als seismische Masse dienenden Permanentmagneten 20, 21 Ausnehmungen 44, 45 auf, um das Gewicht der Änschlußplatte 13a möglichst gering zu halten. Die Grundplatte ist ferner mehrteilig ausgebildet und besteht aus einer Kupferplatte 36a und einem Blechstreifen 37a. Die Kupferplatte 36a hat etwa die gleiche Form wie die Anschlußplatte 13a. Der Blechstreifen 37a übernimmt dabei die Funktion der Fortsätze 37, wie sie beim anderen Ausführungsbeispiel vorhanden sind. Die Kupferplatte 36a liegt an der Unterseite der Anschlußplatte 13a an und hat die gleiche Wirkung, wie sie bereits oben für die Grundplatte 36 beschrieben ist. Die Anschlußplatte 13a wird bei der Montage auf die Kupferplatte 36a aufgelegt und, wie oben, zusammen mit dem Hybrid 25 mit Hilfe von mehreren Zylindernieten 14 im Steckergehäuse 12 befestigt, so daß ein erstes Vormontageteil entsteht. Der Blechstreifen 37a wird beim Spritzen des Gehäuses 10 bereits mit an diesem befestigt. Daduch erhält man wieder das zweite Vormontageteil. Die beiden Vormontageteile werden ineinandergeschoben und der Sensor kann mit Hilfe der Blechstreifen 37a an einem Fahrzeug befestigt werden.

## Patentansprüche

1. Beschleunigungssensor (11) mit einer in einem Gehäuse (10) befindlichen, auf einer Seite eingespannten Biegefeder (17), an deren freiem Ende mindestens ein Sensorelement (20, 21) befestigt ist, das mit einem Hall-Element (30) in Wirkverbindung steht, dadurch gekennzeichnet, daß die Biegefeder (17) mit dem Sensorelement (20, 21) in einer Ausnehmung (15) einer Platte (13) angeordnet ist, und daß sich auf der Platte (13) ein Hybrid (25) mit dem Hall-Element (30) befindet, wobei die Größe der Ausnehmung so bemessen ist, daß ein Überlastschutz gegeben ist.

2. Sensor nach Anspruch 1, dadurch gekennzeichnet, daß das dem Sensorelement (20, 21) abgewandte Ende der Biegefeder (17) an der Platte (13) angeschweißt ist.

3. Sensor nach Anspruch 1 und/oder 2, dadurch gekennzeichnet, daß die Biegefeder (17) in etwa rechteckige Form aufweist.

4. Sensor nach einem der Ansprüche 1 bis 3, dadurch gekennzeichnet, daß die Größe der Ausnehmung (15) dem Meßbereich der Biegefeder (17) angepaßt ist.

5. Sensor nach einem der Ansprüche 1 bis 4, dadurch gekennzeichnet, daß die Platte (13) mit Hilfe mehrerer Zylindernieten (14) an einem Steckergehäuse (12) des Gehäuses (10) befestigt ist.

6. Beschleunigungssensor nach einem der Ansprüche 1 bis 5, dadurch gekennzeichnet, daß eine am Gehäuse (10) angeordnete Grundplatte (36) Befestigungsflansche (37) aufweist und daß die Grundplatte (36) an der dem Hybrid (25) abgewandten Seite der Platte (13) mindestens im Bereich des Sensorelements (20, 21) anliegt.

7. Beschleunigungssensor nach Anspruch 6, dadurch gekennzeichnet, daß die Grundplatte (36) aus nicht magnetischem, aber elektrisch leitendem Material besteht.

8. Beschleunigungssensor nach einem der Ansprüche 1 bis 7, dadurch gekennzeichnet, daß das Sensorelement aus zwei Permanentmagneten (20, 21) besteht, deren magnetische Polaritäten nahezu parallel zueinander verlaufen und in Richtung zum Hall-Element (30) ausgerichtet sind, und daß die Polaritäten der Permanentmagnete (20, 21) entgegengesetzt zueinander ausgerichtet sind.

9. Beschleunigungssensor nach einem der Ansprüche 5 bis 8, dadurch gekennzeichnet, daß das Gehäuse (10) und das Steckergehäuse (12) durch einen Schnappverschluß miteinander verbunden sind.

## Claims

1. Acceleration sensor (11) with a deflection spring (17) fixed at one end and arranged in a casing (10), at the free end of which, at least one sensor element (20, 21) is attached, which is in active connection with a Hall element (30), characterized by the fact that the deflection spring (17), together with the sensor element (20, 21) is arranged in a recess (15) of a plate (13) and that located on the plate (13) is a hybrid (25) with the Hall element (30), with the size of the recess being suitably dimensioned to provide overload protection.

2. Sensor in accordance with claim 1, characterized by the fact that the end of the deflection spring (17) away from the sensor element (20, 21) is welded to the plate (13).

3. Sensor in accordance with claim 1 and/or 2, characterized by the fact that the deflection spring (17) is of approximately rectangular shape.

4. Sensor in accordance with one of the claims 1 to 3, characterized by the fact that the size of the recess (15) is matched to the measuring range of the deflection spring (17).

5. Sensor in accordance with one of the claims 1 to 4, characterized by the fact that the plate (13) is attached to a connector housing (12) of the casing (10) by means of several cheese-head rivets (14).

6. Acceleration sensor in accordance with one of the claims 1 to 5, characterized by the fact that a base plate (36) arranged on the casing (10) has fixing flanges (37) and that the base plate (36) rests, at least in the region of the sensor element (20, 21), against that end of the plate (13) which is away from the hybrid (25).

7. Acceleration sensor in accordance with claim 6, characterized by the fact that the base plate (36) consists of non-magnetic, but electrically conductive material.

8. Acceleration sensor in accordance with one of the claims 1 to 7, characterized by the fact that the sensor element consists of two permanent magnets (20, 21), the magnetic polarities of which run almost parallel to each other and are aligned in the direction towards the Hall element (30) and that the polarities of the permanent magnets (20, 21) are set in opposition to each other.

9. Acceleration sensor in accordance with one of the claims 5 to 8, characterized by the fact that the casing (10) and the connector housing (12) are connected to each other by means of a snap-type closure.

## Revendications

1. Détecteur d'accélération (11) ayant un ressort de flexion (17) encastré, une de ses extrémités se trouvant dans le boîtier (10), au moins un capteur (20, 21) étant fixé à l'extrémité libre de ce ressort qui coopère avec un élément à effet Hall (30), caractérisé en ce que, le ressort de flexion (17) et le capteur (20, 21) sont disposés dans un évidement (15) d'une plaque (13) d'un circuit hybride (25) avec l'élément à effet Hall (30) se trouvant sur la plaque (13), la taille de l'évidement étant dimensionnée pour assurer une protection de surcharge.

2. Détecteur d'accélération selon la revendication 1, caractérisé en ce que l'extrémité opposée du capteur (20, 21) du ressort de flexion (17) est soudée à la plaque (13).

3. Détecteur d'accélération selon l'une des revendications 1 ou 2, caractérisé en ce que le ressort de flexion (17) a une forme sensiblement rectangulaire.

4. Détecteur d'accélération selon l'une des revendications 1 à 3, caractérisé en ce que la taille de l'évidement (15) est adaptée à la zone de mesure du ressort de flexion (17).

5. Détecteur d'accélération selon l'une des revendications 1 à 4, caractérisé en ce que la plaque (13) est fixée à un boîtier de connexion (12) du boîtier (10) à l'aide de plusieurs rivets cylindriques (14).

6. Détecteur d'accélération selon l'une des revendications 1 à 5, caractérisé en ce qu'une plaque de base (36) montée sur le boîtier (10) présente des pattes de fixation (37) et la plaque de base (36) s'appuie au moins dans la zone des éléments de détecteurs (20, 21) contre le côté opposé à celui du circuit hybride (25) de la plaque (13).

7. Détecteur d'accélération selon la revendication 6, caractérisé en ce que la plaque de base (36) est constituée d'un matériau non magnétique mais électriquement conducteur.

8. Détecteur d'accélération selon l'une des revendications 1 à 7, caractérisé en ce que l'élément de détecteur se compose de deux aimants permanents (20, 21) dont les polarités magnétiques sont pratiquement parallèles et dirigés dans la direction de l'élément à effet Hall (30), et en ce que les polarités des aimants permanents (20, 21) sont dirigées en sens opposé, l'une à l'autre.

9. Détecteur d'accélération selon l'une des revendications 5 à 8, caractérisé en ce que le boîtier (10) et le boîtier de connecteur (12) sont reliés entre eux par une liaison d'encliquetage.
